# EUROPÄISCHE PATENTSCHRIFT

(11) **EP 3 768 999 B1**
(45) Veröffentlichungstag und Bekanntmachung des Hinweises auf die Patenterteilung: **21.07.2021**
(21) Anmeldenummer: 19730274.8
(22) Anmeldetag: 29.05.2019
(51) Int. Cl.: F16K 31/524, F16K 27/02, F16K 31/60, E03D 3/00

(54) **VENTIL, ARMATUR UND VERWENDUNG EINES VENTILS**
VALVE, FITTING AND USE OF A VALVE
VALVE, ROBINETTERIE ET UTILISATION D'UNE VALVE

(30) Priorität: 03.07.2018 DE 202018103806 U; 09.08.2018 DE 202018104600 U
(43) Veröffentlichungstag der Anmeldung: 27.01.2021
(73) Patentinhaber: Neoperl GmbH, 79379 Müllheim (DE)
(72) Erfinder: KOWOL, Jacek, 79194 Gundelfingen (DE)
(74) Vertreter: Mertzlufft-Paufler, Cornelius
(86) Internationale Anmeldenummer: PCT/EP2019/064099
(87) Internationale Veröffentlichungsnummer: WO 2020/007543

(56) Entgegenhaltungen:
- CN-A- 106 352 110
- CN-U- 203 230 877
- CN-U- 203 656 296
- CN-U- 203 948 677
- DE-U1-202016 001 106
- DE-U1-202017 101 403
- US-A1- 2006 096 642
- US-A1- 2018 031 141

## Beschreibung

Die Erfindung betrifft ein Ventil gemäß dem Oberbegriff des Anspruchs 1.

Derartige Ventile sind bekannt und werden beispielsweise als Umsteller oder als Schließventile eingesetzt. Häufig sind derartige Ventile mit einer Schaltmembran ausgestattet, die mit dem Arbeitsdruck einer geschalteten Flüssigkeit beaufschlagbar ist, wobei die Push-Push-Betätigungsmechanik zum Schalten der Schaltmembran ein Pilotventil betätigt, welches die Beaufschlagung der Schaltmembran vorgibt. Die Push-push-Betätigungsmechanik kann hierbei wenigstens zwei Schaltzustände einnehmen, und es ist auch vorgeschlagen worden, mehr als zwei Schaltzustände zu realisieren, die nacheinander bei Betätigung durchlaufen werden, beispielsweise für Zwischenstellungen des Ventils.

Da die Push-Push-Betätigungsmechanik kein rotierbares Betätigungselement erfordert, ist es möglich, eine Abdeckkappe mit einer Beschriftung zu versehen, wobei eine gewählte Orientierung der Beschriftung im Raum während eines Betätigungsvorgangs erhalten bleibt. Die Realisierung der richtigen Orientierung erfordert jedoch bei dem Zusammenbau der Armatur erhöhte Konzentration, um ein falsches Zusammenfügen der Einzelteile zu vermeiden.

Die Erfindung betrifft weiter eine Armatur und eine Verwendung eines Ventils an einer Armatur.

CN 203 656 296 U betrifft ein Ventil mit einer Push-Push-Betätigungsmechanik, wobei an einem freien Ende eines Betätigungselements eine Kappenschnittstelle durch ein Gewinde für ein passendes Gegengewinde einer Abdeckkappe ausgebildet ist. Zudem weist das Ventil eine Armaturenschnittstelle auf, um das Ventil in einer definierten Ausrichtung in eine Armatur einsetzen und darin befestigen zu können.

US 2018/031141 A1 offenbart ein gattungsgemäßes Ventil gemäß dem Oberbegriff aus Anspruch 1.

Der Erfindung liegt die Aufgabe zugrunde, die Herstellung einer Armatur zu vereinfachen.

Zur Lösung der Aufgabe sind erfindungsgemäß die Merkmale von, Anspruch 1 vorgesehen.

Von Vorteil ist dabei, dass eine hohe Anzahl von Orientierungen, in denen die Abdeckkappe auf das Betätigungselement aufsetzbar ist, erreichbar ist, ohne dass dies zu einem erhöhten Bearbeitungsaufwand an der Armatur führen muss. Ein Bearbeitungsaufwand bei einer Bearbeitung der Armatur zur Ausbildung einer Armatur-Gegenschnittstelle, welche mit der Armatur-Schnittstelle verbindbar ist und verbunden wird, ist somit gering haltbar. Die vergleichsweise große Anzahl der Orientierungen, in denen die Abdeckkappe aufsetzbar ist, ermöglicht eine leichte Fehlerkorrektur und eine hohe Flexibilität zur Abdeckung unterschiedlicher Einbausituationen.

Ein weiterer Vorteil, der mit einer erfindungsgemäßen Ausgestaltung erreichbar ist, ist ein vergrößerter gestalterischer Freiraum an einer Front, also beispielsweise einer vom Ventil abgewandten Seite, der Abdeckkappe. Hier kann die Front praktisch beliebig geformt sein, beispielsweise rund, eckig, in Freiform, mit einen Gewinde oder anderen Befestigungsvorrichtungen. Die Erfindung ermöglicht es hier, dies mit einem standardisierten Ventil zu erreichen.

Die Kappen-Schnittstelle kann beispielsweise eine Umfangskontur aufweisen, die formschlüssig mit einer passenden, komplementär geformten Kappen-Gegenschnittstelle an einer Abdeckkappe verbunden ist. Somit ist eine drehfeste Befestigung der Abdeckkappe an dem Ventil bereitstellbar. Die Umfangskontur kann hierbei beispielsweise als Innenkontur oder Außenkontur ausgebildet sein, die mit der Abdeckkappe zusammenwirkt.

Alternativ oder zusätzlich kann vorgesehen sein, dass die Armaturen-Schnittstelle eine Umfangskontur aufweist, die formschlüssig mit einer passenden, komplementär geformten Armaturen-Gegenschnittstelle an dem Grundkörper verbunden ist. Somit ist das Ventil drehfest an der Armatur befestigbar.

Erfindungsgemäß ist es vorgesehen, dass die Kappen-Schnittstelle eine n-zählige diskrete Drehsymmetrie aufweist. Die Ausbildung der diskreten Drehsymmetrie an der Kappen-Schnittstelle ist ein einfaches Mittel, um die beschriebenen Orientierungen, in denen die Abdeckkappe verbindbar ist, definieren zu können.

Zusätzlich kann vorgesehen sein, dass die Armaturen-Schnittstelle eine m-zählige Drehsymmetrie aufweist. Die Ausbildung einer diskreten Drehsymmetrie an der Armatur-Schnittstelle ist ein einfaches Mittel, um die beschriebenen Orientierungen, in denen das Ventil in die Armatur einsetzbar ist, definieren zu können.

Bei einer Ausgestaltung der Erfindung kann vorgesehen sein, dass die Kappen-Schnittstelle eine n-eckige Umfangskontur aufweist. N-eckige, insbesondere regelmäßige, Umfangskonturen, beispielsweise dreieckige, quadratische, rechteckige, fünfeckige, sechseckige, achteckige, Umfangskonturen, sind mit geringem Herstellungsaufwand bereitstellbar, beispielsweise in Spritzgusstechnik.

Günstig ist es demnach oder allgemein, wenn das Betätigungselement aus Kunststoff hergestellt ist.

Bei einer Ausgestaltung der Erfindung kann vorgesehen sein, dass n eine durch vier teilbare Zahl ist. Somit ist eine einfache Ausrichtung der Abdeckkappe zumindest in jede der vier Raumorientierungen, in denen die Armatur betrieben werden kann, erreichbar.

Bei einer Ausgestaltung der Erfindung kann vorgesehen sein, dass die Armaturen-Schnittstelle ein Positionierelement hat, mit dem es in eine korrespondierend geformte Ventilaufnahme einer Armatur in genau einer Orientierung einsetzbar ist. Von Vorteil ist dabei, dass zu einer drehfesten Verbindung nur wenige Bearbeitungsschritte, beispielsweise eine Fräsbearbeitung eines Gegenelements, etwa eine Nut, zur Aufnahme des Positionierelements, beispielsweise einer Rippe oder Feder, erforderlich sind.

Bei einer Ausgestaltung der Erfindung kann vorgesehen sein, dass die Kappen-Schnittstelle zur Ausbildung einer Schnapp- und/oder Rastverbindung ausgebildet ist. Somit ist eine einfach montierbare und/oder lösbare Verbindung zwischen der Abdeckkappe und dem Betätigungselement herstellbar. Die Lösbarkeit kann beispielsweise verwendet werden, um eine falsche Orientierung der Abdeckkappe im montierten Zustand korrigieren zu können.

Bei einer Ausgestaltung der Erfindung kann vorgesehen sein, dass ein Mittel zur Schnapp- und/oder Rastverbindung in einer Aufsteckrichtung einem Mittel zur drehfesten Führung nachgelagert ist. Somit ist erreichbar, dass zuerst eine Orientierung der Abdeckkappe festgelegt wird, bevor die Schnapp- und/oder Rastverbindung die Abdeckkappe fest, insbesondere lösbar, mit dem Betätigungselement verbindet. Die Aufsteckrichtung kann beispielsweise durch die Abdeckkappe definiert sein. Hierbei kann vorgesehen sein, dass wenigstens eine Rastnase ausgebildet ist, beispielsweise an einem Federelement. Somit ist ausreichend Elastizität im Material bereitstellbar, damit die Schnapp- und/oder Rastverbindung einschnappen kann. Bevorzugt sind n Rastnasen ausgebildet, oder die Anzahl der Rastnasen ist ein echter Teiler von n. Alternativ oder zusätzlich kann vorgesehen sein, dass eine Rast-Hinterschneidung ausgebildet ist, beispielsweise an der Abdeckkappe. Besonders günstig ist es, wenn die Anordnung und/oder Ausgestaltung der Rast-Hinterschneidung (en) ebenfalls eine n-zählige Drehsymmetrie aufweisen.

Bei einer Ausgestaltung der Erfindung kann vorgesehen sein, dass an dem Betätigungselement ein Gewinde ausgebildet ist. Somit ist eine lösbare Befestigung der Abdeckkappe über eine Schraubverbindung herstellbar. Das Gewinde kann hierbei beispielsweise der Kappen-Schnittstelle in einer Aufsteckrichtung vorgelagert angeordnet sein. Dies ermöglicht ein einfaches Befestigen der Abdeckkappe mit einem Gegengewinde, beispielsweise an einer Schraube oder einer Mutter. Beispielsweise kann das Gewinde an einem Gewindebolzen ausgebildet sein. Dies ermöglicht es, die Abdeckkappe auf den Gewindebolzen aufzustecken und anschließend mit einer Mutter zu sichern. Ein Deckel kann vorgesehen sein, um die Mutter oder eine Schraube zu verdecken.

Bei einer Ausgestaltung der Erfindung kann vorgesehen sein, dass an dem Grundkörper ein Befestigungselement zur Befestigung an einer Armatur ausgebildet ist, die relativ zu dem Grundkörper beweglich angeordnet ist. Von Vorteil ist dabei, dass der Grundkörper - im Gegensatz beispielsweise zu einem an diesem ausgebildeten Gewinde - nicht aus der definierten Orientierung gedreht werden muss, um das Ventil an der Armatur zu befestigen. In einem konstruktiv einfachen Fall kann das Befestigungselement beispielsweise eine Befestigungsmutter sein.

Zur Lösung der Aufgabe bei einer Armatur sind erfindungsgemäß die Merkmale des nebengeordneten, auf eine Armatur gerichteten Schutzanspruchs vorgesehen. Insbesondere wird somit erfindungsgemäß bei einer Armatur mit einer Abdeckkappe und einem erfindungsgemäßen Ventil, insbesondere nach einem der auf ein Ventil gerichteten Ansprüche und/oder wie zuvor beschrieben, vorgeschlagen, dass die Abdeckkappe eine Kappen-Gegenschnittstelle aufweist, die zu der Kappen-Schnittstelle passend, insbesondere geometrisch und/oder formschlüssig passend, ausgebildet ist. Es ist somit einfach erreichbar, dass die Abdeckkappe in n Orientierungen, also beispielsweise Ausrichtungen in Bezug auf eine Drehachse, um die die Abdeckkappe drehbar ist, montierbar ist.

Die Abdeckkappe kann hierbei einteilig, insbesondere wie bereits und/oder weiter unten beschrieben, oder mehrteilig, beispielsweise mit einem Kappengrundstück, einer Mutter und einem Deckel, insbesondere wie weiter unten beschrieben, ausgebildet sein.

Alternativ oder zusätzlich kann erfindungsgemäß zur Lösung der Aufgabe bei einer Armatur mit einer Abdeckkappe und einem erfindungsgemäßen Ventil, insbesondere nach einem der auf ein Ventil gerichteten Ansprüche und/oder wie zuvor beschrieben, vorgesehen sein, dass die Armatur eine Armaturen-Gegenschnittstelle aufweist, die zu der Armaturen-Schnittstelle passend ausgebildet ist. Somit ist auf einfache Weise eine Abdeckkappe in unterschiedlichen Orientierungen drehfest an einer Armatur montierbar.

Bei einer Ausgestaltung der Erfindung kann vorgesehen sein, dass die Armatur aus Metall hergestellt ist. Von Vorteil ist dabei, dass vermeidbare, vergleichsweise aufwendige Bearbeitungsschritte am Metall der Armatur, beispielsweise zur Ausbildung einer hohen Drehsymmetrie, vermeidbar sind.

Alternativ oder zusätzlich kann bei einer Ausgestaltung der Erfindung vorgesehen sein, dass die Abdeckkappe aus Kunststoff hergestellt ist. Die Erfindung macht sich somit zunutze, dass eine vergleichsweise hohe Drehsymmetrie einfach an einem Kunststoffteil, insbesondere bei einem Spritzgussteil, erreichbar ist. Alternativ oder zusätzlich, beispielsweise bei einer mehrkomponentigen Ausführung, kann die Abdeckkappe aus Kunststoff hergestellt sein.

Bei einer Ausgestaltung der Erfindung kann vorgesehen sein, dass die Armaturen-Schnittstelle gewindefrei ausgebildet ist. Von Vorteil ist dabei, dass der Grundkörper unter Beibehaltung seiner Orientierung in die Ventilaufnahme einsetzbar ist.

Bei einer Ausgestaltung der Erfindung kann vorgesehen sein, dass der Grundkörper zumindest im Bereich der Armaturen-Schnittstelle eine zylindrische Grundform aufweist. Von Vorteil ist dabei, dass der Grundkörper kompatibel mit allen diskreten Drehsymmetrien der Armaturen-Schnittstelle ausbildbar ist.

Bei einer Ausgestaltung der Erfindung kann vorgesehen sein, dass die Armatur eine Ventilaufnahme aufweist, in die der Grundkörper des Ventils eingesetzt ist. Die Ventilaufnahme kann fräsbearbeitet sein, insbesondere zur Ausbildung der bereits erwähnten Armaturen-Gegenschnittstelle. Da die Fräs-Bearbeitungsschritte fertigungstechnisch besonderes aufwendig sind, kann eine reduzierte Drehsymmetrie an der Armatur zur Reduzierung des Fertigungsaufwands genutzt werden. Beispielsweise kann der Grundkörper drehfest in die Ventilaufnahme eingesetzt sein. Von Vorteil ist dabei, dass die Orientierung, mit der das Ventil in die Armatur eingesetzt ist, erhalten bleibt.

Zur Lösung der Aufgabe bei einer Verwendung eines Ventils sind erfindungsgemäß die Merkmale des nebengeordneten, auf eine Verwendung gerichteten Anspruchs vorgesehen. Insbesondere wird somit bei der Verwendung eines erfindungsgemäßen Ventils, insbesondere nach einem der auf ein Ventil gerichteten Ansprüche, an einer erfindungsgemäßen Armatur, insbesondere nach einem der auf eine Armatur gerichteten Ansprüche, vorgeschlagen, dass das Ventil in einer Grundkörper-Orientierung in die Armatur eingesetzt wird und auf das Betätigungselement eine Abdeckkappe in einer Kappen-Orientierung aufgesetzt wird. Somit ist auf einfache Weise eine Anpassung der Orientierung der Abdeckkappe relativ zu der Armatur realisierbar. Die gegenüber der Abdeckkappe reduzierte Drehsymmetrie an der Armatur spart Fertigungsaufwand bei der Bearbeitung, beispielsweise Drehbearbeitung, einer Ventilaufnahme der Armatur, insbesondere der bereits erwähnten und/oder später genauer beschriebenen Ventilaufnahme.

Die Orientierung kann beispielsweise in Bezug auf eine Beschriftung der Abdeckkappe definiert oder ausgezeichnet sein. Somit ist eine Abdeckkappe mit einer Beschriftung in einer gewünschten Orientierung an dem Betätigungselement montierbar.

Bei einer Ausgestaltung der Erfindung kann vorgesehen sein, dass die Kappen-Orientierung so gewählt wird, dass die Abdeckkappe in Gebrauchsstellung eine gewünschte Orientierung im Raum aufweist. Somit kann eine Beschriftung der Abdeckkappe leicht lesbar sein.

Alternativ oder zusätzlich kann bei einer Ausgestaltung der Erfindung vorgesehen sein, dass die Grundkörper-Orientierung so gewählt wird, dass die Abdeckkappe in Gebrauchsstellung eine gewünschte Orientierung im Raum aufweist. Somit ist eine äußere Form- und/oder Konturgebung und/oder eine Beschriftung und/oder Einfärbung oder eine sonstige Markierung einfach für den Betrachter in einer gewünschten Orientierung ausbildbar.

Die Erfindung wird nun anhand eines Ausführungsbeispiels näher beschrieben, ist aber nicht auf dieses Ausführungsbeispiel beschränkt. Weitere Ausführungsbeispiele ergeben sich durch Kombination der Merkmale einzelner oder mehrerer Unteransprüche untereinander und/oder mit einzelnen oder mehreren Merkmalen des Ausführungsbeispiels.

Es zeigt
- Fig. 1: eine dreidimensionale Schrägansicht in Explosionsdarstellung auf ein erfindungsgemäßes Ventil mit Abdeckkappe, Befestigungselement und Teil einer Armatur,
- Fig. 2: das Ventil aus Figur 1 in einer Ansicht von schräg unten mit zugehöriger Abdeckkappe,
- Fig. 3: eine seitliche Ansicht auf das Ventil gemäß Figur 1 in montierter Position, wobei ein Teil Armatur in Schnittdarstellung gezeigt ist und wobei ein Teil der Abdeckkappe gezeigt ist,
- Fig. 4: eine teilweise aufgeschnittene Schrägansicht auf das Ventil gemäß Figur 1,
- Fig. 5: eine Seitenansicht auf das Ventil gemäß Figur 1,
- Fig. 6: eine Ansicht auf die Abdeckkappe aus Figur 1 von unten,
- Fig. 7: eine Axialschnittdarstellung durch die Abdeckkappe gemäß Figur 1,
- Fig. 8: eine teilweise aufgeschnittene Darstellung des Ventils gemäß Figur 1 mit aufgesetzter, aufgeschnittener Abdeckkappe,
- Fig. 9: eine Seitenansicht auf das Ventil gemäß Figur 1 mit aufgesetzter, axial aufgeschnittener Abdeckkappe,
- Fig. 10: die fertig montierte Anordnung aus Figur 1 mit beispielhafter Bedruckung,
- Fig. 11: die Anordnung gemäß Figur 10 aus einer anderen betrachteten Position,
- Fig. 12: eine Vergrößerung aus Figur 11,
- Fig. 13: eine Ansicht auf das Ventil nach Figur 1 bei abgenommener Abdeckkappe
- Fig. 14: unterschiedliche Orientierungen, in denen die Abdeckkappe auf das Ventil nach Fig. 1 aufsetzbar ist,
- Fig. 15: ein weiteres Beispiel einer verwendbaren Abdeckkappe zu der Anordnung gemäß Figur 1,
- Fig. 16: die Abdeckkappe und das Betätigungselement aus Figur 15 mit Ansicht auf die Kappen-Gegenschnittstelle der Abdeckkappe und auf die Kappen-Schnittstelle des Betätigungselements,
- Fig. 17: ein weiteres erfindungsgemäßes Ventil mit angesetzter, teilweise aufgeschnittener Abdeckkappe,
- Fig. 18: das Ventil aus Fig. 17 mit Abdeckkappe in einer dreidimensionalen Schrägansicht mit Blick entgegen einer Einsetzrichtung des Ventils und
- Fig. 19: das Ventil aus Fig. 17 mit Abdeckkappe in einer dreidimensionalen Schrägansicht mit Blick auf die Abdeckkappe entlang einer Einsetzrichtung des Ventils.

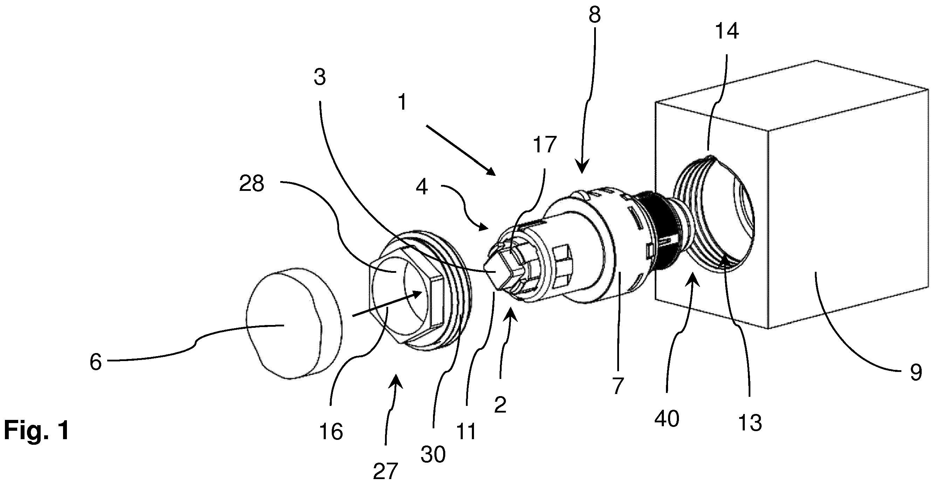

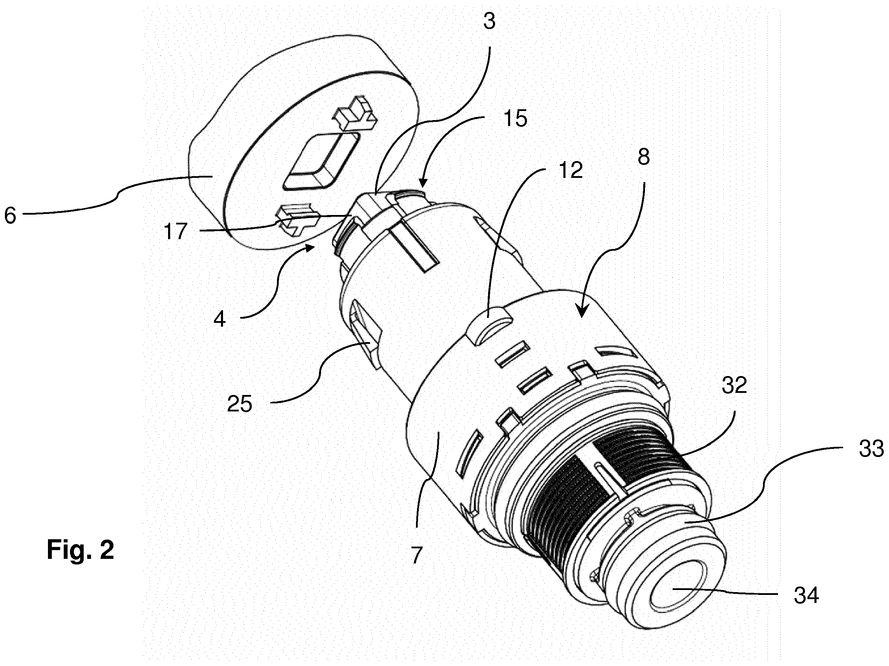

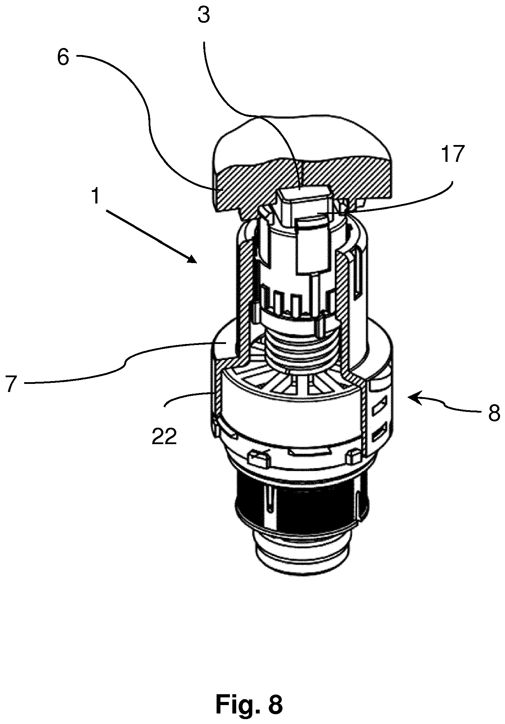

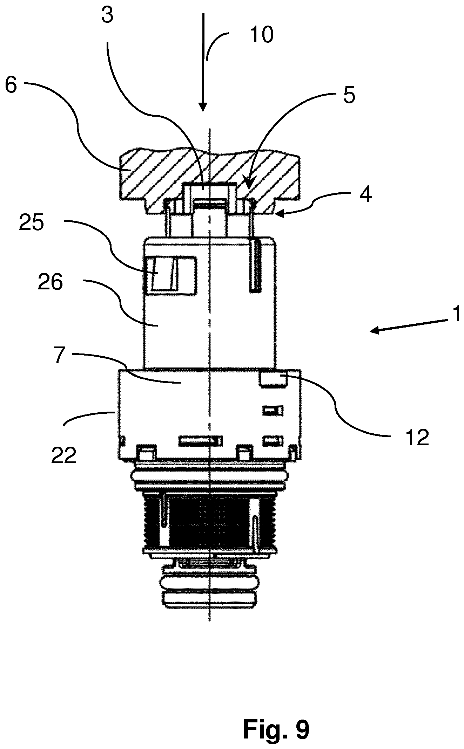

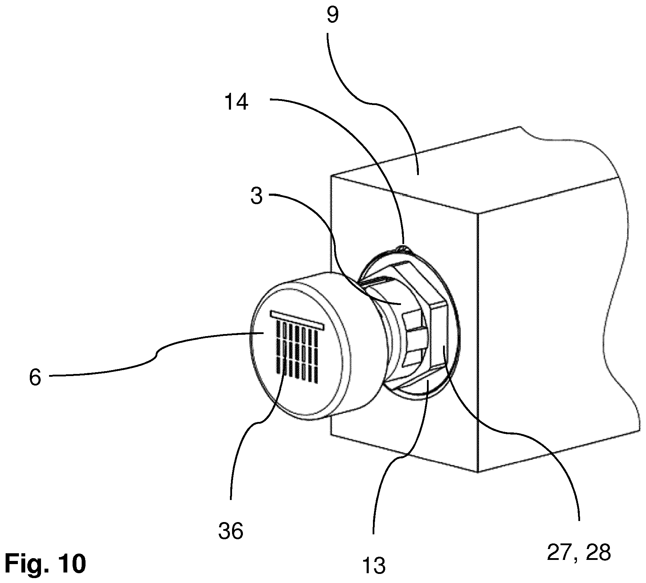

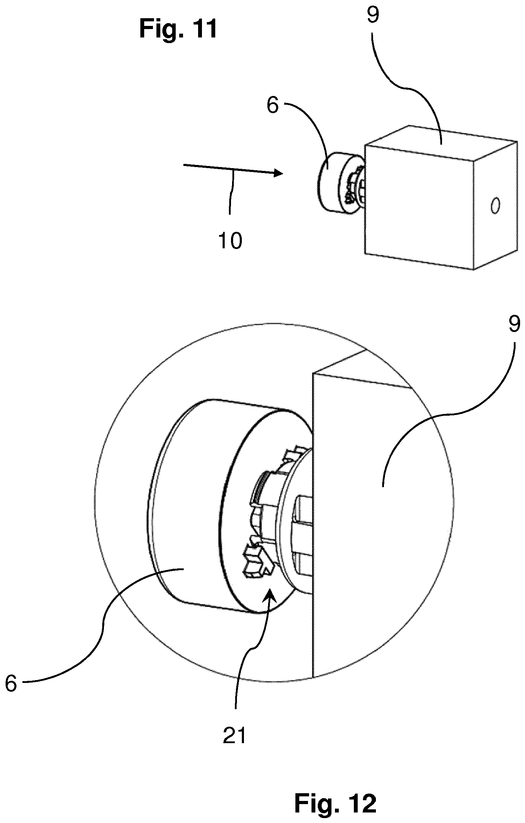

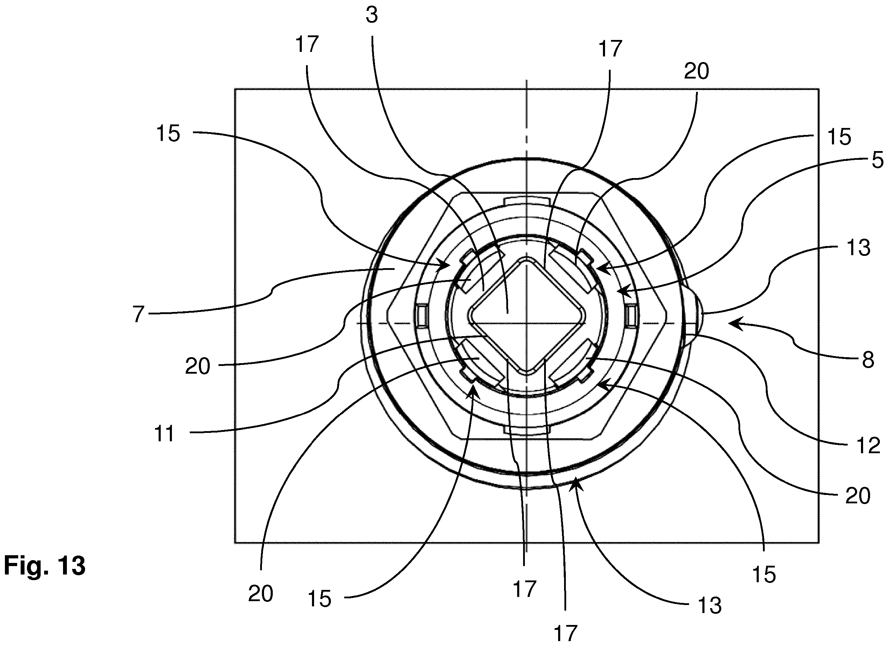

Die Figuren 1 bis 14 werden im Folgenden gemeinsam beschrieben.

Figur 1 zeigt ein im Ganzen mit 1 bezeichnetes Ventil. Das Ventil 1 hat in an sich bekannterweise im Inneren eine Push-Push-Betätigungsmechanik 2, die in an sich bekannter Weise durch wiederholtes Drücken auf ein Betätigungselement 3 ein Umschalten des Ventils 1 zwischen wenigstens zwei Schaltpositionen, beispielsweise einer Offenposition und einer Schließposition oder mehreren Offenpositionen mit unterschiedlichem Öffnungsquerschnitt, ermöglicht.

An dem freien Ende 4 ist eine Kappen-Schnittstelle 5 ausgebildet. Wie noch genauer erörtert wird, umfasst die Kappen-Schnittstelle 5 eine Anzahl von gestalterischen Elementen, welche eine Verbindung zu einer Abdeckkappe 6 ermöglichen.

Hierbei ist die Abdeckkappe 6 auf ihrer dem freien Ende 4 zugewandten Seite entsprechend komplementär ausgebildet.

Das Ventil 1 hat weiter einen Grundkörper 7, der mit meiner Armaturen-Schnittstelle 8 ausgebildet ist. Diese Armaturen-Schnittstelle 8 hat in noch genauer zu beschreibender Weise gestalterische Elemente, die es erlauben, das Ventil 1 in eine entsprechend ausgestalte Armatur 9 einzusetzen und an dieser zu befestigen.

Hierbei dient die Abdeckkappe 6 dazu, das Erscheinungsbild des Ventils 1 an das äußere Erscheinungsbild der Armatur 9 anzupassen.

Das Betätigungselement 3 ist entlang einer Betätigungsrichtung 10 zur Ausübung der Push-Push-Betätigung verschiebbar.

Hierbei dient eine von Push-Push-Betätigungsmechaniken an sich bekannte Führung dazu, diese Verschiebebewegung drehfest in Bezug auf die Betätigungsrichtung 10 zu führen.

Die Kappen-Schnittstelle 5 ist geometrisch so ausgebildet, dass sich eine korrespondierend ausgebildete Abdeckkappe 6 in vier Orientierungen, die sich jeweils durch eine Drehung um eine durch die Betätigungsrichtung 10 definierte Achse um 90° bilden lassen, aufsetzbar und mit dem Betätigungselement 3 verbindbar. Dies wird dadurch erreicht, dass die Kappen-Schnittstelle 4 eine vierzählige diskrete Drehsymmetrie um die Betätigungsrichtung 10 aufweist.

Die Armaturen-Schnittstelle 8 ist hierbei mit einer Umfangskontur 11 ausgerüstet, die im Wesentlichen, beispielsweise abgesehen von notwendigen Rundungen - die Form eines Vierecks oder - bei anderen Ausführungsbeispielen - die Form eines n-Ecks aufweist.

Bei weiteren Ausführungsbeispielen sind andere Typen der Drehsymmetrie realisiert, beispielsweise zweizählige, dreizählige, fünfzählige oder mehr als fünfzählige, insbesondere Drehsymmetrien, deren Symmetriegrad durch eine durch vier teilbare Zahl n beschreibbar ist.

Bei dem Ausführungsbeispiel gemäß den Figuren 1 bis 14 ist die Armaturen-Schnittstelle 8 mit einer Drehsymmetrie ausgebildet, die die Verbindung mit der Armatur 9 in einer einzigen Orientierung erlaubt. Dies wird durch entsprechende Ausbildung eines einzigen Positionierelements 12 am Umfang des Grundkörpers 7 erreicht, durch welches jegliche Drehsymmetrie gebrochen wird. Das Positionierelement 12 kann beispielsweise als Nase oder Vorsprung ausgebildet sein.

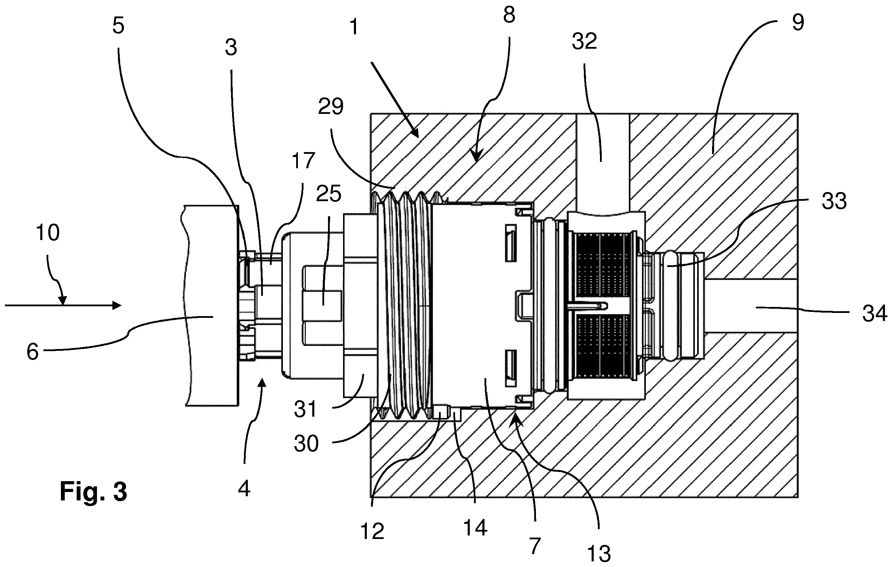

Aus Figur 3 ist ersichtlich, dass der Grundkörper 7 des Ventils 1 in eine Ventilaufnahme 13 an der Armatur 9 gesetzt wird. In der Ventilaufnahme 13 ist eine Positionierausnehmung 14 eingearbeitet, welche auf das Positionierelement 12 abgestimmt ist. Somit passt das Ventil 1 nur in genau einer Orientierung in die Ventilaufnahme 13. Die Positionierausnehmung 14 in der Ventilaufnahme 13 bildet somit eine Armaturen-Gegenschnittstelle 40.

Durch die Ausbildung der beschriebenen Symmetrie an der Kappen-Schnittstelle 5 kann somit erreicht werden, dass die Abdeckkappe 6 in einer Vielzahl von Orientierungen positionierbar ist, ohne dass die Ventilaufnahme 13 wesentlich von einer runden Innenkontur abweichen muss. Die Ventilaufnahme 13, die in der Regel in eine metallische Armatur 9 eingearbeitet wird, kann daher mit einfachen Fertigungsverfahren hergestellt werden. Eine Nachbearbeitung ist nur in geringem Umfang erforderlich, beispielsweise zum Einbringen der Positionierausnehmung 14.

Die Kappen-Schnittstelle 5 weist ein Mittel zur Ausbildung einer Schnapp- und/oder Rastverbindung 15 auf. Diese dienen zur Befestigung der Abdeckkappe 6 auf dem freien Ende 4.

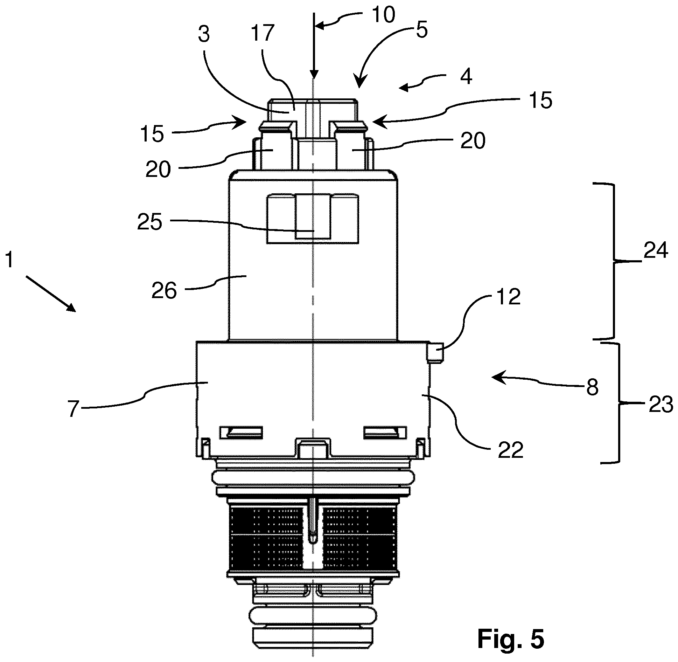

In Figur 5 ist ersichtlich, dass das Mittel zur Ausbildung einer Schnapp- und/oder Rastverbindung 15 in einer Aufsteckrichtung 16 dem Beginn der Umfangskontur 11, durch welche ein Mittel zur drehfesten Führung 17 der Abdeckkappe 6 ausgebildet ist, nachgeordnet angeordnet ist. Die Führung ergibt sich daraus, dass die Umfangskontur 11 in Aufsteckrichtung 16 weitergeführt wird, so dass sich parallel zur Aufsteckrichtung 16 verlaufende Flächen ausbilden. Die Kappen-Gegenschnittstelle 21 weist entsprechende Flächen auf, die mit diesen Flächen zusammenwirken.

Hierdurch wird erreicht, dass die Abdeckkappe 6 zuerst mit dem Mittel zur drehfesten Führung 17 in Kontakt kommt. Weiteres Aufschieben der Abdeckkappe 6 auf das Betätigungselement 3 bewirkt ein Verrasten der Abdeckkappe 6 auf dem freien Ende 4.

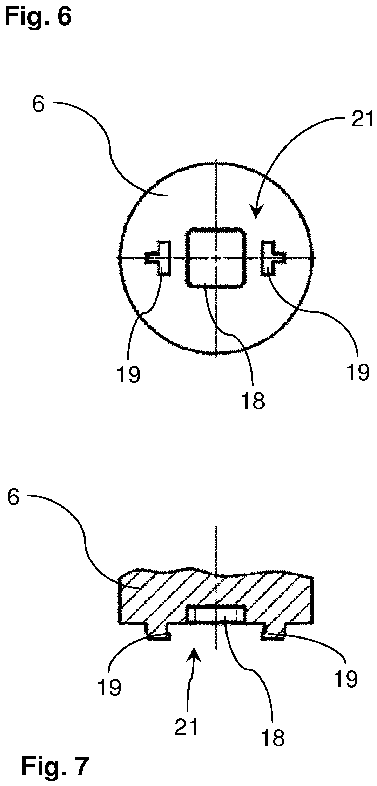

In Fig. 6 bis 9 ist ersichtlich, dass die Abdeckkappe eine Ausnehmung 18 aufweist. Die Ausnehmung 18 ist auf die Umfangskontur 11 des freien Endes 4 derart abgestimmt, dass die Abdeckkappe 6 auf dem freien Ende 4 drehfest, aber in Aufsteckrichtung 16 verschiebbar geführt ist.

An der Abdeckkappe 6 sind Rast-Hinterschneidungen 19 ausgebildet, die mit Rastfedern 20 des Mittels zur Ausbildung einer Schnapp- und/oder Rastverbindung 15 verrasten. Die Rastfedern 20 sind jeweils aus einem Federelement 38 und einer Rastnase 39 zusammengesetzt oder weisen diese jeweils auf.

Die Ausnehmung 18 und die Rast-Hinterschneidungen 19 bilden somit eine Kappen-Gegenschnittstelle 21, die zu der Kappen-Schnittstelle 5 passt. Die Symmetrie der Kappen-Gegenschnittstelle 21 kann hierbei identisch zur derjenigen der Kappen-Schnittstelle 5 oder kompatibel zu dieser (bspw. zweizählig) ausgebildet sein.

An dem Grundkörper 7 ist ein Abschnitt mit einer zylindrischen Grundform 22 als Einsetzabschnitt 23 ausgebildet, auf den das Positionierelement 12 aufgesetzt ist. Dieser Einsetzabschnitt 23 passt in die Ventilaufnahme 14. Vor diesem Einsetzabschnitt 23 ist ein Befestigungsabschnitt 24 ausgebildet, der Haltenasen 25 an einem Gehäuseteil 26 trägt.

Auf das Gehäuseteil 26 wird zur Montage ein Befestigungselement 27, hier eine Befestigungsmutter 28, gesetzt, die von den Haltenasen 25 in ihrer Position unverlierbar gehalten wird.

Das Befestigungselement 27 wird mit einem Gegengewinde 29 in ein Gewinde 30 der Ventilaufnahme 13 geschraubt, um das Ventil 1 zu fixieren. Somit muss das Ventil 1 selbst nicht gedreht werden, und die Orientierung einer aufgesetzten Abdeckkappe 6 bleibt in Bezug auf die Armatur 9 erhalten. An dem Befestigungselement 27 ist umfangsseitig ein Werkzeugangriff 31, z.B. ein Außensechskant, ausgebildet, um einen festen Halt des Ventils 1 zu erreichen.

Das Ventil 1 verschließt, wie in Figur 3 ersichtlich ist, eine Verbindung zwischen einem Einlass 32 und einem Auslass 34 bzw. gibt diese frei. Eine Dichtung 33 zwischen dem Einlass 32 und dem Auslass 34 verhindert Leckströme bei geschlossenem Ventil 1.

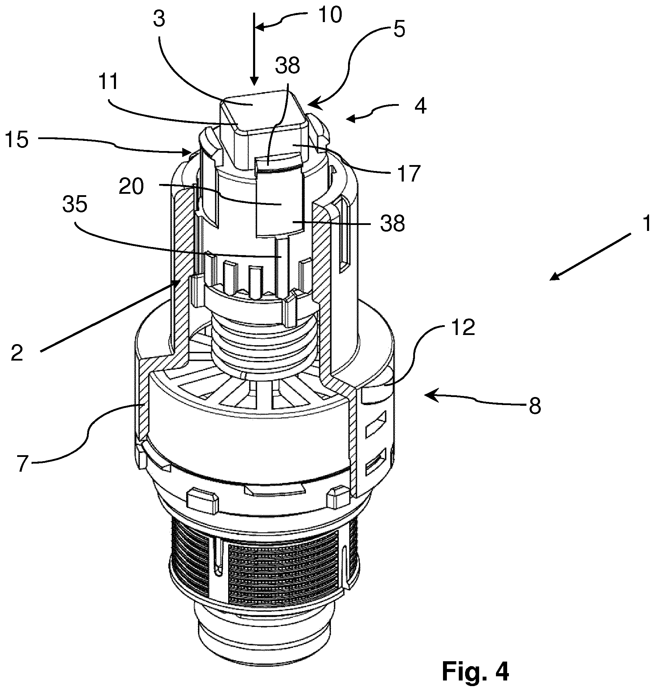

In Figur 4 sind Führungselemente 35 einer an sich bekannten Push-Push-Betätigungsmechanik 2 dargestellt. Diese Führungselemente 35 bewirken eine drehfeste, in Betätigungsrichtung 10 verschiebbare Führung des Betätigungselements 3 und somit einer mit diesem verrasteten Abdeckkappe 6.

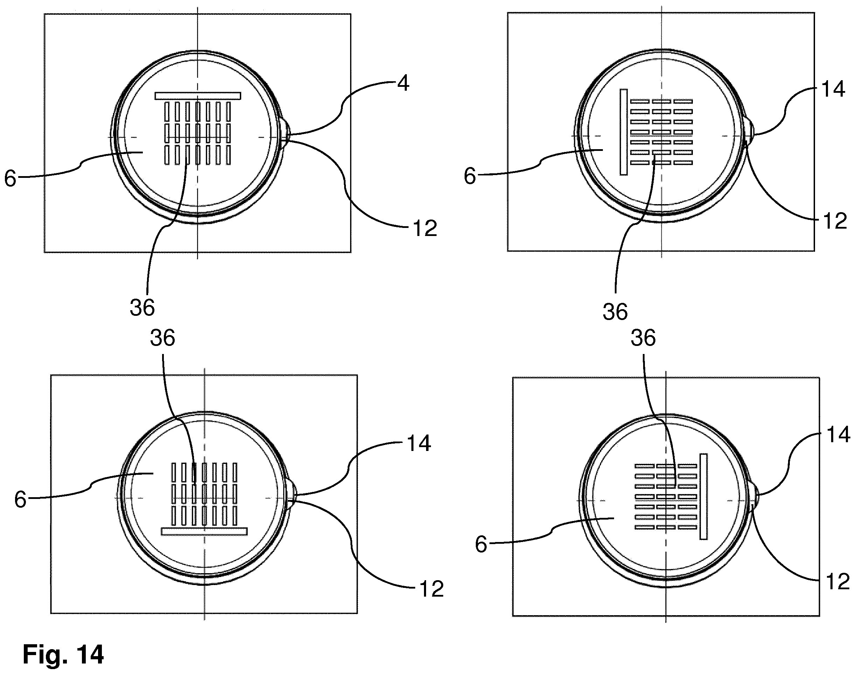

Es ist somit möglich, wie in Figur 14 dargestellt, eine Markierung 36 auf der Abdeckkappe 6 dauerhaft in vier verschiedenen Orientierungen in Bezug auf die Armatur 9 - bei weiteren Ausführungsbeispielen in n verschiedenen Orientierungen - auszurichten. Somit kann die Markierung 36 unabhängig von der Einbaulage der Armatur 9 immer so ausgerichtet werden, dass ein Benutzer sie richtig wahrnehmen kann.

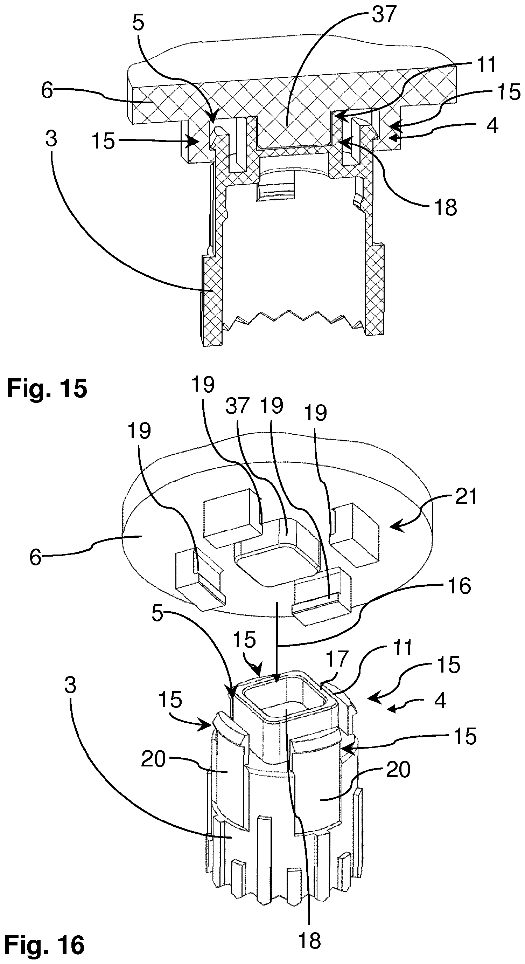

Die Figuren 15 und 16 zeigen ein weiteres Ausführungsbeispiel der Erfindung. Konstruktiv und/oder funktionell gleichartige oder identische Bauteile und Funktionseinheiten sind mit denselben Bezugszeichen bezeichnet und nicht noch einmal gesondert beschrieben. Die Ausführungen zu den Figuren 1 bis 14 gelten daher zu den Figuren 15 und 16 entsprechend.

Das Ausführungsbeispiel nach den Figuren 15 und 16 unterscheidet sich von dem vorangegangenen Ausführungsbeispiel dadurch, dass die Kappen-Gegenschnittstelle 21 ebenfalls vierzählig ausgebildet ist, während diese bei dem vorangegangenen Ausführungsbeispiel zweizählig war. Dies erreicht einen festeren Halt der Abdeckkappe 6 auf dem freien Ende 4.

Das Ausführungsbeispiel nach den Figuren 15 und 16 unterscheidet sich von dem vorangegangenen Ausführungsbeispiel außerdem dadurch, dass an der Abdeckkappe 6 eine Erhebung 37 ausgebildet ist, welche in eine Ausnehmung 18 an dem freien Ende 4 des Betätigungselements 3 eingesetzt wird. Hier ist die Umfangskontur 11, durch welche die drehfeste Verbindung zwischen der Abdeckkappe 6 und dem Betätigungselement 3 hergestellt ist, als Innenkontur ausgebildet, während sie bei den Figuren 1 bis 14 als Außenkontur ausgeformt ist.

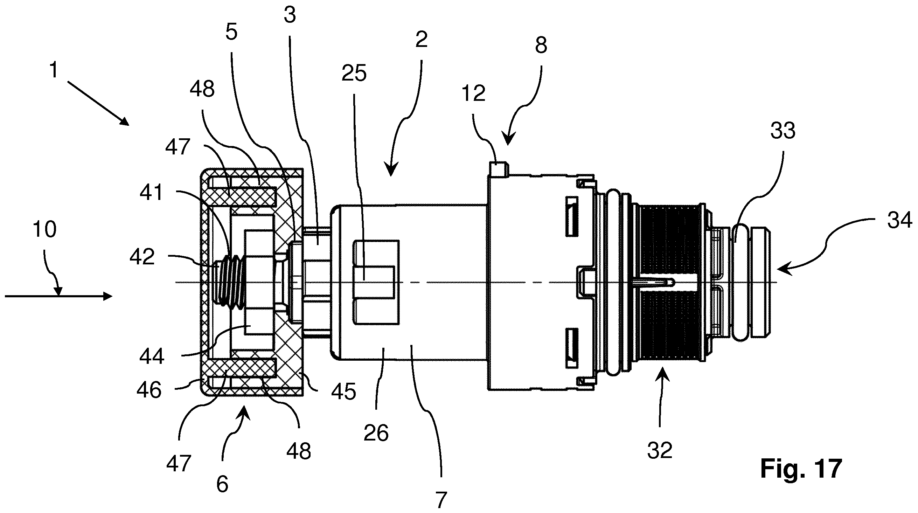

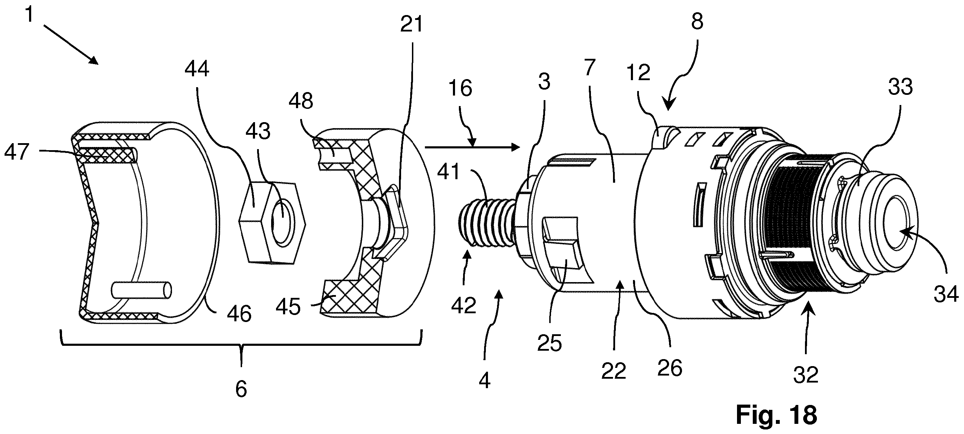

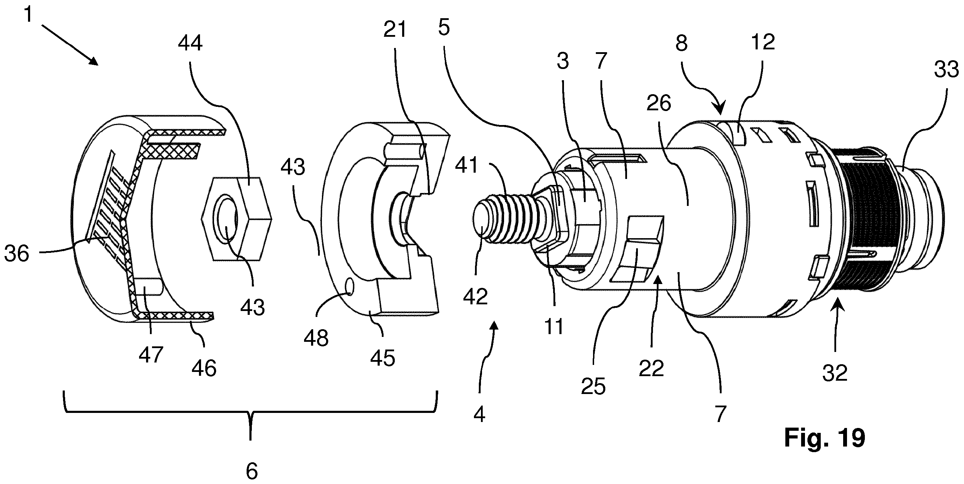

Die Figuren 17 bis 19 zeigen ein weiteres Ausführungsbeispiel der Erfindung. Konstruktiv und/oder funktionell gleichartige oder identische Bauteile und Funktionseinheiten sind mit denselben Bezugszeichen bezeichnet und nicht noch einmal gesondert beschrieben. Die Ausführungen zu den Figuren 1 bis 16 gelten daher zu den Figuren 17 bis 19 entsprechend.

Das Ausführungsbeispiel nach den Figuren 17 bis 19 unterscheidet sich von dem vorangegangenen Ausführungsbeispiel dadurch, dass keine Rastverbindung zwischen dem Betätigungselement 3 und der Abdeckkappe 6 ausgebildet ist.

Vielmehr ist bei dieser Variante an dem Betätigungselement 3 ein Gewinde 41 ausgebildet. Dieses Gewinde 41 ist an einem Gewindebolzen 42 angeordnet, und kann mit einem Gegengewinde 43 an einer Haltemutter 44 verschraubt werden.

Da der Gewindebolzen 42 der Kappen-Schnittstelle 5 vorgelagert ist, kann der Gewindebolzen 42 durch ein Kappengrundstück 45 durchgesteckt, mit der Haltemutter 42 fixiert und hinter einem Deckel 46 verborgen werden.

Wenigstens ein Stift 47 - hier zwei Stifte 47 - am Deckel 46 und wenigstens eine - hier zwei - passende Stiftaufnahme 48 am Kappengrundstück 45 bilden eine Verdrehsicherung. Diese Verdrehsicherung ist bei weiteren Ausführungsbeispielen auf andere Weise, beispielsweise durch Ausgestaltung entsprechender Konturen und/oder durch eine form-, kraft- und/oder stoffschlüssige Verbindung zwischen Deckel 46 und Kappengrundstück 45, ausgebildet.

Bei einem weiteren, nicht dargestellten Ausführungsbeispiel ist das Betätigungselement mehrteilig ausgebildet und umfasst die in Figur 17 bis 19 dargestellten Teile 3 und 45. Die Abdeckkappe ist durch das Teil 46 gebildet, und die Kappen-Schnittstelle 5 ist durch die Stiftaufnahmen 48 realisiert. Mit den zwei Stiftaufnahmen 48 ist eine Drehsymmetrie von 180°, also n=2, hergestellt. Höhere Werte für n werden durch eine größere Anzahl (n) von gleichmäßig verteilten Stiftaufnahmen 48 erreicht. Die Stifte 47 definieren die Kappen-Gegenschnittstelle 21. Die Konturen der Einzelheiten 5 und 21 können in diesem Fall so ausgestalten sein, dass eine Verbindung in nur einer Orientierung möglich ist. Im Übrigen kann das Ausführungsbeispiel wie in den Figuren 17 bis 19 ausgestaltet sein.

Bei einem sanitären Ventil 1 mit einer Push-Push-Betätigungsmechanik 2 wird somit vorgeschlagen, eine Kappen-Schnittstelle 5 zwischen einer Abdeckkappe 6 und einem Betätigungselement 3 mit einer höheren Drehsymmetrie als eine Armaturen-Schnittstelle 8 zwischen dem Ventil 1 und einer Armatur 9 auszubilden.

### Bezugszeichenliste

- 1: Ventil
- 2: Push-Push-Betätigungsmechanik
- 3: Betätigungselement
- 4: freies Ende
- 5: Kappen-Schnittstelle
- 6: Abdeckkappe
- 7: Grundkörper
- 8: Armaturen-Schnittstelle
- 9: Armatur
- 10: Betätigungsrichtung
- 11: Umfangskontur
- 12: Positionierelement
- 13: Ventilaufnahme
- 14: Positionierausnehmung
- 15: Mittel zur Schnapp- und/oder Rastverbindung
- 16: Aufsteckrichtung
- 17: Mittel zur drehfesten Führung
- 18: Ausnehmung
- 19: Rast-Hinterschneidung
- 20: Rastfeder
- 21: Kappen-Gegenschnittstelle
- 22: zylindrische Grundform
- 23: Einsetzabschnitt
- 24: Befestigungsabschnitt
- 25: Haltenase
- 26: Gehäuseteil
- 27: Befestigungselement
- 28: Befestigungsmutter
- 29: Gegengewinde
- 30: Gewinde
- 31: Werkzeugangriff
- 32: Einlass
- 33: Dichtung
- 34: Auslass
- 35: Führungselement
- 36: Markierung
- 37: Erhebung
- 38: Federelement
- 39: Rastnase
- 40: Armaturen-Gegenschnittstelle
- 41: Gewinde
- 42: Gewindebolzen
- 43: Gegengewinde
- 44: Haltemutter
- 45: Kappengrundstück
- 46: Deckel
- 47: Stift
- 48: Stiftaufnahme

## Patentansprüche

1. Ventil (1) mit einer Push-Push-Betätigungsmechanik (2), die ein Betätigungselement (3) hat, das an seinem freien Ende (4) eine Kappen-Schnittstelle (5) für eine Abdeckkappe (6) ausbildet, wobei das Ventil (1) einen Grundkörper (7) hat, der eine Armaturen-Schnittstelle (8) zu einer Armatur (9) definiert, wobei das Betätigungselement (3) relativ zu dem Grundkörper (7) drehfest und in einer Betätigungsrichtung (10) verschieblich geführt ist, wobei die Kappen-Schnittstelle (5) so gestaltet ist, dass die Abdeckkappe (6) in n Orientierungen relativ zu dem Betätigungselement (3) verbindbar ist, wobei die Armaturen-Schnittstelle (8) so gestaltet ist, dass der Grundkörper (7) in m Orientierungen in die Armatur (9) einsetzbar ist, und wobei die Kappen-Schnittstelle (5) eine n-zählige diskrete Drehsymmetrie aufweist, **dadurch gekennzeichnet, dass** n≥m gilt.

2. Ventil (1) nach Anspruch 1, **dadurch gekennzeichnet, dass** die Armaturen-Schnittstelle (8) eine m-zählige Drehsymmetrie aufweist.

3. Ventil (1) nach Anspruch 1 oder 2, **dadurch gekennzeichnet, dass** die Kappen-Schnittstelle (5) eine n-eckige Umfangskontur (11) aufweist.

4. Ventil (1) nach einem der vorangehenden Ansprüche, **dadurch gekennzeichnet, dass** n eine durch vier teilbare Zahl ist.

5. Ventil (1) nach einem der vorangehenden Ansprüche, **dadurch gekennzeichnet, dass** die Armaturen-Schnittstelle (8) ein Positionierelement (12) hat, mit dem es in eine korrespondierend geformte Ventilaufnahme (13) einer Armatur (9) in genau einer Orientierung einsetzbar ist.

6. Ventil (1) nach einem der vorangehenden Ansprüche, **dadurch gekennzeichnet, dass** die Kappen-Schnittstelle (5) zur Ausbildung einer Schnapp- und/oder Rastverbindung ausgebildet ist.

7. Ventil (1) nach Anspruch 6, **dadurch gekennzeichnet, dass** ein Mittel zur Schnapp- und/oder Rastverbindung (15) in einer Aufsteckrichtung (16) der Abdeckkappe (6), einem Mittel zur drehfesten Führung (17) nachgelagert ist und/oder dass an dem Betätigungselement (3) der Kappen-Schnittstelle (5) in einer Aufsteckrichtung vorgelagert, ein Gewinde (41) ausgebildet ist.

8. Ventil (1) nach einem der vorangehenden Ansprüche, **dadurch gekennzeichnet, dass** an dem Grundkörper (7) ein Befestigungselement (27) zur Befestigung an einer Armatur (9) ausgebildet ist, die relativ zu dem Grundkörper (7) beweglich angeordnet ist.

9. Ventil (1) nach einem der vorangehenden Ansprüche, **dadurch gekennzeichnet, dass** die Armaturen-Schnittstelle (8) gewindefrei ausgebildet ist und/oder dass der Grundkörper (7) zumindest im Bereich der Armaturen-Schnittstelle (8) eine zylindrische Grundform (22) aufweist.

10. Armatur (9) mit einer Abdeckkappe (6) und einem Ventil (1) nach einem der vorangehenden Ansprüche, wobei die Abdeckkappe (6) eine Kappen-Gegenschnittstelle (21) aufweist, die zu der Kappen-Schnittstelle (5) passend ausgebildet ist, und/oder wobei die Armatur (9) eine Armaturen-Gegenschnittstelle (40) aufweist, die zu der Armaturen-Schnittstelle (8) passend ausgebildet ist.

11. Armatur (9) nach Anspruch 10, **dadurch gekennzeichnet, dass** die Armatur (9) aus Metall und/oder die Abdeckkappe (6) aus Kunststoff und/oder Metall hergestellt ist/sind.

12. Armatur (9) nach Anspruch 10 oder 11, **dadurch gekennzeichnet, dass** die Armatur (9) eine Ventilaufnahme (13) aufweist, in die der Grundkörper (7) des Ventils (1) eingesetzt ist.

13. Verwendung eines Ventils (1) nach einem der Ansprüche 1 bis 9 an einer Armatur (9) wobei das Ventil (1) in einer Grundkörper-Orientierung in die Armatur (9) eingesetzt wird und auf das Betätigungselement (3) eine Abdeckkappe (6) in einer Kappen-Orientierung aufgesetzt wird.

14. Verwendung nach Anspruch 13, **dadurch gekennzeichnet, dass** die Kappen-Orientierung und/oder die Grundkörper-Orientierung so gewählt werden, dass die Abdeckkappe (6) in Gebrauchsstellung eine gewünschte Orientierung im Raum aufweist.

## Claims

1. Valve (1) having a push-push actuation mechanism (2) which has an actuation element (3) which, at its free end (4), forms a cap interface (5) for a covering cap (6), wherein the valve (1) has a main body (7) which defines a fitting interface (8) for a fitting (9), wherein the actuation element (3) is guided in a manner rotationally fixed relative to the main body (7) and so as to be displaceable in an actuation direction (10), wherein the cap interface (5) is formed such that the covering cap (6) is able to be connected in n orientations relative to the actuation element (3), wherein the fitting interface (8) is formed such that the main body (7) is able to be inserted into the fitting (9) in m orientations, and wherein the cap interface (5) has discrete rotational symmetry of order n, **characterized in that** n≥m holds.

2. Valve (1) according to Claim 1, **characterized in that** the fitting interface (8) has rotational symmetry of order m.

3. Valve (1) according to Claim 1 or 2, **characterized in that** the cap interface (5) has an n-gonal peripheral contour (11).

4. Valve (1) according to one of the preceding claims, **characterized in that** n is a number divisible by four.

5. Valve (1) according to one of the preceding claims, **characterized in that** the fitting interface (8) has a positioning element (12) by way of which it is able to be inserted into a correspondingly shaped valve receptacle (13) of a fitting (9) in exactly one orientation.

6. Valve (1) according to one of the preceding claims, **characterized in that** the cap interface (5) is configured for forming a snap-action and/or latching connection.

7. Valve (1) according to Claim 6, **characterized in that** a means for a snap-action and/or latching connection (15) is, in a plugging-on direction (16) of the covering cap (6), arranged beyond a means for rotationally fixed guidance (17), and/or **in that** a thread (41) is formed on the actuation element (3) so as to be arranged ahead of the cap interface (5) in a plugging-on direction.

8. Valve (1) according to one of the preceding claims, **characterized in that**, on the main body (7), a fastening element (27) is configured for fastening to a fitting (9) and is arranged so as to be movable relative to the main body (7).

9. Valve (1) according to one of the preceding claims, **characterized in that** the fitting interface (8) is formed without a thread, and/or **in that** the main body (7) has a cylindrical basic shape (22) at least in the region of the fitting interface (8).

10. Fitting (9) with a covering cap (6) and a valve (1) according to one of the preceding claims, wherein the covering cap (6) has a cap counterpart interface (21) which is configured for matching the cap interface (5), and/or wherein the fitting (9) has a fitting counterpart interface (40) which is configured for matching the fitting interface (8).

11. Fitting (9) according to Claim 10, **characterized in that** the fitting (9) is produced from metal and/or the covering cap (6) is produced from plastic and/or metal.

12. Fitting (9) according to Claim 10 or 11, **characterized in that** the fitting (9) has a valve receptacle (13) into which the main body (7) of the valve (1) is inserted.

13. Use of a valve (1) according to one of Claims 1 to 9 at a fitting (9), wherein the valve (1) is inserted into the fitting (9) in an orientation of the main body, and a covering cap (6) is mounted onto the actuation element (3) in an orientation of the cap.

14. Use according to Claim 13, **characterized in that** the orientation of the cap and/or the orientation of the main body are/is selected such that the covering cap (6) has a desired spatial orientation in a position of use.

## Revendications

1. Valve (1) comprenant un mécanisme d'actionnement à poussoir (2), qui est pourvu d'un élément d'actionnement (3), qui forme à son extrémité libre (4) une interface de capuchon (5) destinée à un capuchon de recouvrement (6), dans laquelle la valve (1) comprend un corps de base (7) qui définit une interface de robinetterie (8) par rapport à une robinetterie (9), dans laquelle l'élément d'actionnement (3) est guidé de manière solidaire en rotation par rapport au corps de base (7) et de manière coulissante dans une direction d'actionnement (10), dans laquelle l'interface de capuchon (5) est conçue de telle sorte que le capuchon de recouvrement (6) puisse être relié dans n orientations par rapport à l'élément d'actionnement (3), dans laquelle l'interface de robinetterie (8) est conçue de telle sorte que le corps de base (7) puisse être inséré à l'intérieur de la robinetterie (9) dans m orientations, et dans laquelle l'interface de capuchon (5) présente une symétrie de révolution discrète d'ordre n, **caractérisée en ce que** n ≥ m.

2. Valve (1) selon la revendication 1, **caractérisée en ce que** l'interface de robinetterie (8) présente une symétrie de révolution d'ordre m.

3. Valve (1) selon la revendication 1 ou 2, **caractérisée en ce que** l'interface de capuchon (5) présente un contour périphérique (11) polygonal.

4. Valve (1) selon l'une quelconque des revendications précédentes, **caractérisée en ce que** n est un entier qui peut être divisé par quatre.

5. Valve (1) selon l'une quelconque des revendications précédentes, **caractérisée en ce que** l'interface de robinetterie (8) comprend un élément de positionnement (12) à l'aide duquel elle peut être insérée à l'intérieur d'un logement de valve (13) formé de manière correspondante d'une robinetterie (9) dans exactement une orientation.

6. Valve (1) selon l'une quelconque des revendications précédentes, **caractérisée en ce que** l'interface de capuchon (5) est conçue de manière à permettre la réalisation d'une liaison par enclenchement et/ou par encliquetage.

7. Valve (1) selon la revendication 6, **caractérisée en ce qu'**un moyen pour la liaison par enclenchement et/ou encliquetage (15) dans une direction d'enfichage (16) du capuchon de recouvrement (6) est situé en aval d'un moyen pour le guidage solidaire en rotation (17) et/ou **en ce qu'**un filet (41) est réalisé sur l'élément d'actionnement (3) en étant située en amont de l'interface de capuchon (5) dans une direction d'enfichage.

8. Valve (1) selon l'une quelconque des revendications précédentes, **caractérisée en ce qu'**un élément de fixation (27) pour la fixation sur une robinetterie (9), qui est disposée de manière mobile par rapport au corps de base (7), est réalisé sur le corps de base (7).

9. Valve (1) selon l'une quelconque des revendications précédentes, **caractérisée en ce que** l'interface de robinetterie (8) est réalisée sans filet et/ou **en ce que** le corps de base (7) présente au moins dans la zone de l'interface de robinetterie (8) une forme de base (22) cylindrique.

10. Robinetterie (9) comprenant un capuchon de recouvrement (6) et une valve (1) selon l'une quelconque des revendications précédentes, dans laquelle le capuchon de recouvrement (6) présente une interface complémentaire de capuchon (21) qui est réalisée de manière adaptée à l'interface de capuchon (5), et/ou dans laquelle la robinetterie (9) présente une interface complémentaire de robinetterie (40) qui est réalisée de manière adaptée à l'interface de robinetterie (8).

11. Robinetterie (9) selon la revendication 10, **caractérisée en ce que** la robinetterie (9) est fabriquée à partir de métal et/ou le capuchon de recouvrement (6) est fabriqué à partir d'une matière plastique et/ou de métal.

12. Robinetterie (9) selon la revendication 10 ou 11, **caractérisée en ce que** la robinetterie (9) présente un logement de valve (13) à l'intérieur duquel le corps de base (7) de la valve (1) est inséré.

13. Utilisation d'une valve (1) selon l'une quelconque des revendications 1 à 9 sur une robinetterie (9), dans laquelle la valve (1) est insérée à l'intérieur de la robinetterie (9) dans une orientation de corps de base et un capuchon de recouvrement (6) est posé sur l'élément d'actionnement (3) dans une orientation de capuchon.

14. Utilisation selon la revendication 13, **caractérisée en ce que** l'orientation de capuchon et/ou l'orientation de corps de base est (sont) choisie(s) de telle sorte que le capuchon de recouvrement (6) présente dans la position d'utilisation une orientation souhaitée dans l'espace.
